(19)

Europäisches
Patentamt

European
Patent Office

Office européen
des brevets

(11) **EP 4 701 182 A1**

(12) **EUROPEAN PATENT APPLICATION**

(43) Date of publication:
**25.02.2026 Bulletin 2026/09**

(21) Application number: **24306384.9**

(22) Date of filing: **21.08.2024**

(51) International Patent Classification (IPC):
*H04N 19/13* (2014.01)     *H04N 19/149* (2014.01)
*H04N 19/172* (2014.01)     *H04N 19/46* (2014.01)

(52) Cooperative Patent Classification (CPC):
**H04N 19/13; H04N 19/149; H04N 19/172;
H04N 19/46**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **SCHNITZLER, Francois
56890 SAINT AVE (FR)**

• **EL IDRISSI, Taha
35700 RENNES (FR)**
• **LAMBERT, Anne
35250 SAINT-AUBIN-D'AUBIGNE (FR)**
• **DAMODARAN, Bharath Bhushan
56000 VANNES (FR)**
• **LE MEUR, Olivier
35160 TALENSAC (FR)**

(74) Representative: **Vossius & Partner
Patentanwälte Rechtsanwälte mbB
Siebertstraße 3
81675 München (DE)**

(54) **SPATIOTEMPORAL CONTEXT FOR HYBRID INR NETWORK**

(57)     Apparatuses and methods are disclosed for encoding and decoding data. Techniques disclosed provide for the encoding of a data region of a frame. The encoding includes training an INR network to produce the data region from latent variables. And, determining distributions of the latent variables using respective contexts, constructed based on latent variables located within a shaped context region. Then, coding into a bitstream the latent variables based on the determined distributions and further coding into the bitstream the parameters of the trained INR network. Techniques disclosed also provide for decoding the data region. The decoding includes decoding from the bitstream the parameters of the INR network, determining the distributions of the latent variables using the respective contexts, and decoding from the bitstream the latent variables based on the determined distributions. Using the parameters of the INR network, the INR network produces the data region from the latent variables.

**FIG. 11**

## Description

### BACKGROUND

An implicit neural representation (INR) network is a neural network that is trained to represent a specific signal; the INR network is trained to predict a sample value of the signal when presented with the sample's spatial coordinates. A hybrid INR network improves the INR network's capability to learn local patterns of the signal. To that end, sample coordinates of the signal are first mapped into latent variables and the INR network is trained to represent the signal based on these latent variables. When the hybrid INR network is applied to signal compression, the latent variables represent the signal in the bitstream. To efficiently entropy code the latent variables, their respective distributions should be used. Current approaches estimate the latent variables' respective distributions based on context. The manner in which such context is constructed is instrumental in exploiting spatial and temporal redundancies across the latent variables.

### SUMMARY

Aspects disclosed in the present disclosure describe methods for encoding data. These methods comprise encoding, into a bitstream, a data region of a currently encoded frame. The encoding includes training an INR network to produce the data region from latent variables, where the training determines parameters of the INR network. Additionally, determining distributions of the latent variables, where a distribution of a latent variable is determined using a respective context, constructed based on latent variables located within a shaped context region. Then, coding into the bitstream the latent variables based on the determined distributions; and coding into the bitstream the parameters of the INR network. Aspects disclosed in the present disclosure also describe methods for decoding data. These methods comprise decoding, from a bitstream, a data region of a currently decoded frame. The decoding includes decoding from the bitstream parameters of an INR network that is trained to produce the data region from latent variables. Additionally, determining distributions of the latent variables, where a distribution of a latent variable is determined using a respective context, constructed based on latent variables located within a shaped context region. Then, decoding from the bitstream the latent variables based on the determined distributions. Using the parameters of the INR network, the INR network produces the data region from the latent variables.

Aspects disclosed in the present disclosure describe apparatuses for encoding data. The apparatuses comprise at least one processor and memory storing instructions. The instructions, when executed by the at least one processor, cause the apparatuses to encode, into a bitstream, a data region of a currently encoded frame. The encoding includes training an INR network to produce the data region from latent variables, where the training determines parameters of the INR network. Additionally, determining distributions of the latent variables, where a distribution of a latent variable is determined using a respective context, constructed based on latent variables located within a shaped context region. Then, coding into the bitstream the latent variables based on the determined distributions; and coding into the bitstream the parameters of the INR network. Aspects disclosed in the present disclosure also describe apparatuses for decoding data. The apparatuses comprise at least one processor and memory storing instructions. The instructions, when executed by the at least one processor, cause the apparatuses to decode, from a bitstream, a data region of a currently decoded frame. The decoding includes decoding from the bitstream parameters of an INR network that is trained to produce the data region from latent variables. Additionally, determining distributions of the latent variables, where a distribution of a latent variable is determined using a respective context, constructed based on latent variables located within a shaped context region. Then, decoding from the bitstream the latent variables based on the determined distributions. Using the parameters of the INR network, the INR network produces the data region from the latent variables

Aspects disclosed in the present disclosure describe a non-transitory computer-readable medium comprising instructions executable by at least one processor to perform methods for encoding data. These methods comprise encoding, into a bitstream, a data region of a currently encoded frame. The encoding includes training an INR network to produce the data region from latent variables, where the training determines parameters of the INR network. Additionally, determining distributions of the latent variables, where a distribution of a latent variable is determined using a respective context, constructed based on latent variables located within a shaped context region. Then, coding into the bitstream the latent variables based on the determined distributions; and coding into the bitstream the parameters of the INR network. Aspects disclosed in the present disclosure also describe a non-transitory computer-readable medium comprising instructions executable by at least one processor to perform methods for decoding data. These methods comprise decoding, from a bitstream, a data region of a currently decoded frame. The decoding includes decoding from the bitstream parameters of an INR network that is trained to produce the data region from latent variables. Additionally, determining distributions of the latent variables, where a distribution of a latent variable is determined using a respective context, constructed based on latent variables located within a shaped context region. Then, decoding from the bitstream the latent variables based on the determined distributions. Using the parameters of the INR network, the INR network produces the data region from the latent variables

This Summary is provided to introduce a selection of concepts in a simplified form that is further described below in the Detailed Description. This Summary is not intended to identify key features or essential features of the claimed subject matter, nor is it intended to be used to limit the scope of the claimed subject matter. Furthermore, the claimed subject matter is not limited to limitations that solve any or all disadvantages noted in any part of this disclosure.

## BRIEF DESCRIPTION OF THE DRAWINGS

FIG. 1 is a block diagram of an example system, according to which aspects of the present embodiments can be implemented.

FIG. 2 is a diagram illustrating an example INR network, according to which aspects of the present embodiments can be implemented.

FIG. 3 is a block diagram of an example video encoder, according to which aspects of the present embodiments can be implemented.

FIG. 4 is a block diagram of an example video decoder, according to which aspects of the present embodiments can be implemented.

FIG. 5 is a diagram illustrating a hybrid INR network, according to which aspects of the present embodiments can be implemented.

FIG. 6 is a block diagram illustrating an example video encoder applying a hybrid INR network, according to which aspects of the present embodiments can be implemented.

FIG. 7 is a block diagram illustrating an example video decoder applying a hybrid INR network, according to which aspects of the present embodiments can be implemented.

FIG. 8 is a block diagram illustrating prediction of a latent variable distribution, using a spatial context, according to which aspects of the present embodiments can be implemented.

FIG. 9 is a block diagram illustrating an example video encoder applying a predictive hybrid INR network, according to which aspects of the present embodiments can be implemented.

FIG. 10 is a block diagram illustrating an example video decoder applying a predictive hybrid INR network, according to which aspects of the present embodiments can be implemented.

FIG. 11 is a block diagram illustrating prediction of a latent variable distribution, using a spatiotemporal context, according to which aspects of the present embodiments can be implemented.

FIG. 12 is a diagram illustrating configurations of context region shapes, according to which aspects of the present embodiments can be implemented.

FIG. 13 is a diagram illustrating other configurations of context region shapes, according to which aspects of the present embodiments can be implemented.

FIG. 14 is a flowchart of an example method for encoding data, according to which aspects of the present embodiments can be implemented.

FIG. 15 is a flowchart of an example method for decoding data, according to which aspects of the present embodiments can be implemented.

## DETAILED DESCRIPTION

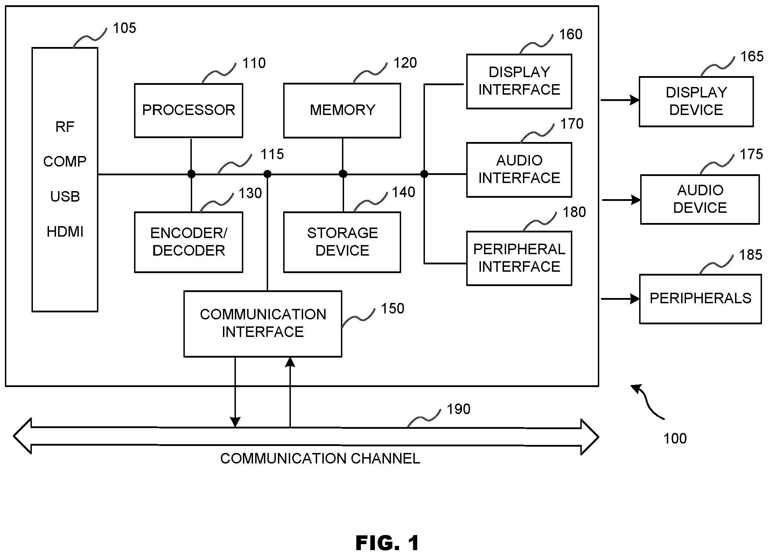

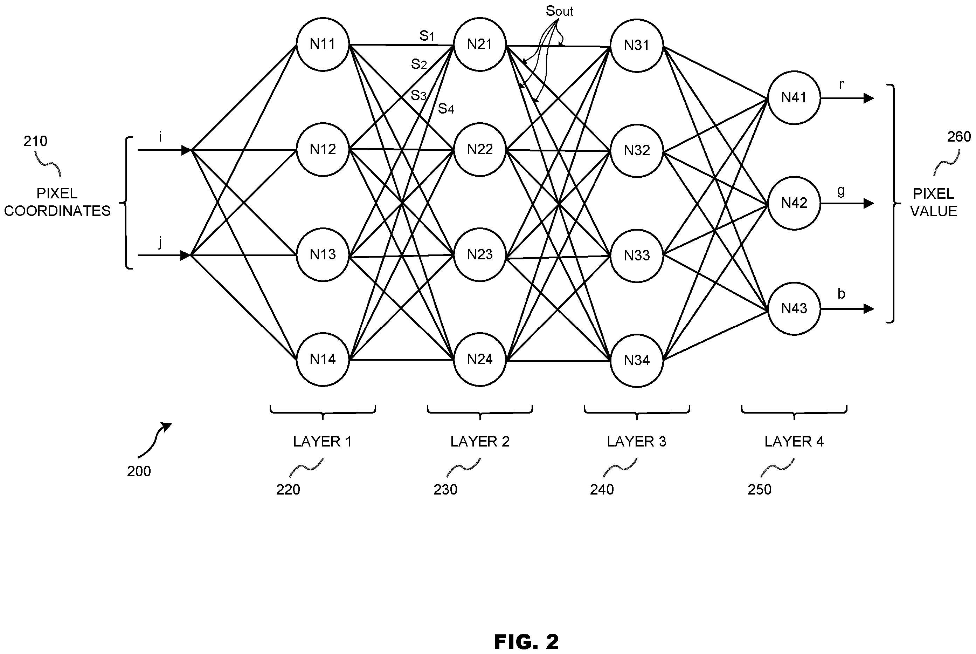

Apparatuses and methods described herein for encoding and decoding data applying a hybrid INR network or a predictive hybrid INR network. A system for processing and displaying content, with which various aspects and examples described herein may be implemented, is generally described in reference to FIG. 1, followed by a description of the aspects of the present disclosure in reference to FIGS. 2-15.

FIG. 1 is a block diagram of an example system, according to which aspects of the present embodiments can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

Generally, video codecs can be classified into conventional codecs, autoencoders, and overfitted codecs. Conventional codecs, currently the most common ones, are based on predictive coding, such as those following the advance video coding (H.264/AVC), the high efficiency video coding (HEVC), or the versatile video coding (VVC) standards. On the other hand, an autoencoder is a neural network that is trained to map input images (video frames) into respective sets of latent variables and then map back the sets of latent variables to approximated versions of the input images. During training, the autoencoder parameters are optimized to minimize a rate-distortion cost function. Thus, using the trained autoencoder, encoding an image involves mapping the image into a set of latent variables and decoding the image involves mapping the set of latent variables into a reconstructed version of the image. Since autoencoders are generically trained (that is, their training is based on a large number of images) to compete with the performance of conventional codecs, for example, their complexity (the number of parameters and multiplications involved per pixel) is high. Relative to autoencoders, overfitted codecs, using INR networks, offer lower complexity while still achieving the performance levels of conventional codecs.

Representing data via INR networks is a relatively new technology that has only recently been investigated by the computer vision and computer graphics communities. INR networks are studied for the applications of compression, where an efficient representation of signals (such as, still images, videos, surfaces, and volumes) is required. In contrast to an autoencoder, an INR network is trained to represent a specific signal. Hence, unlike autoencoders, an INR-based codec is not generic but is adapted (overfitted) to the signal to be coded and is, therefore, more efficient. Moreover, since the INR network is trained to predict a signal based on the signal's coordinates, the trained network can be applied to progressively reconstruct the signal based on any set of coordinates (e.g., a subset of the coordinates used in the training, or any other set of extrapolated or interpolated coordinates therefrom). For simplicity of the presentation, aspects of INR network applications are described herein with respect to images (e.g., video frames); however, these aspects are extendable to other data frames, such as those representing surfaces of objects and volumetric data that may be changing overtime.

FIG. 2 is a diagram illustrating an example INR network 200. An INR network is a neural network composed of multiple layers, each layer includes multiple nodes (denoted by circles). Generally, the architecture of a neural network is characterized by the number of layers, the number of layers' nodes, and by the way the layers' nodes are connected. In the example of FIG. 2, the network 200 has four layers 220, 230, 240, 250 that are fully connected. For example, the first layer 220 includes four nodes N11, N12, N13, and N14 that each receives the coordinate values ($i, j$) 210 of a pixel x and each outputs an output signal that, in turn, feeds the nodes of the next layer, N21, N22, N23, and N24. Likewise, the second layer 230 includes four nodes N21, N22, N23, and N24, that each receives the output signals of nodes from the previous layer, N11, N12, N13, and N14, and each outputs an output signal that, in turn, feeds the nodes of the next layer, N31, N32, N33, and N34. The fourth layer 250 includes three nodes N41, N42, and N43 that each receives the output signals of the nodes from the previous layer, N31, N32, N33, N34 and each outputs a color component value 260 of the pixel $x$, respectively, $r$, $g$, and $b$ (or color component values of any other color model, such as $y$, $u$, and $v$).

Each node in the network 200 represents an operator that generates an output signal based on the node's inputs. For example, node N21 of the second layer 230 receives as an input the output signals of nodes N11, N12, N13, and N14,

respectively, $s_1$, $s_2$, $s_3$, and $s_4$. These inputs are translated into an output signal $s_{out}$ that feeds the nodes of the third layer 240. A node's operator can be expressed as follows:

$$s_{out} = A(p_0 + \sum_{i=1}^{L} p_i \cdot s_i), \qquad\qquad (1)$$

where, $L$ denotes the number of input signals (i.e., the number of nodes from the previous layer that connect to the node), $s = \{s_i : i = 1\ to\ L\}$ denotes the node's input signal vector, $s_{out}$ denotes the node's output signal, $p = \{p_i : i = 0\ to\ L\}$ denotes the node's parameter vector (or weight vector), and $A$ denotes an activation function (e.g., ReLU, Sigmoid, or Tanh). The weight vectors (and parameters of the activation functions, if such parameters exist) of respective nodes are collectively referred to as the parameters $\theta$ of the network 200. These parameters $\theta$ are determined through a training process. The network operation, denoted by $f_\theta$, is therefore defined by the network parameters $\theta$.

Hence, an INR network 200 is trained to predict a pixel value of an image, $x(i,j)$, based on the pixel's coordinates $(i,j)$ - that is, $f_\theta(i,j) = (r,g,b)$ (or $f_\theta(i,j) = (y, u, v)$). During a training phase of an INR network 200, the parameters $\theta$ (or a subset of them) are determined. This is done via an optimization process through which the parameters $\theta$ that minimize a cost function can be determined. For example, the following cost function can be used:

$$Cost = D(\boldsymbol{x}, f_{\boldsymbol{\theta}}) + \lambda R(\theta) \qquad\qquad (2)$$

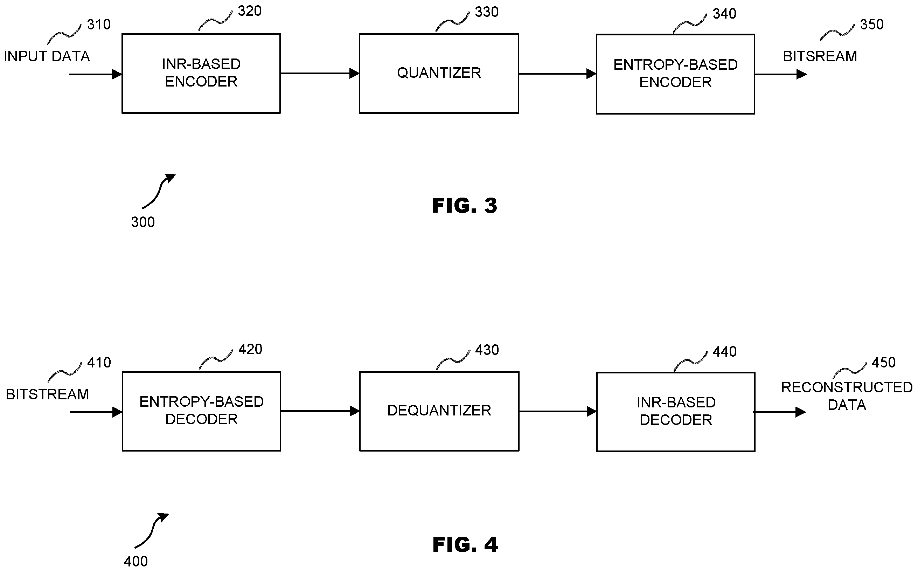

where, $D$ is a distortion measure, measuring the fidelity of the estimated pixel values, provided by $f_\theta$, relative to the ground truth, that is, the corresponding pixel values from the original image, denoted by $x$. And, where $R$ is the resulting bitrate of the encoded parameters $\theta$ (e.g., encoded by quantization and entropy coding as discussed with respect to FIG. 3). A trade-off parameter $\lambda$ can be set to determine the balance between $D$ and $R$. Note that the distortion measure $D$ can be any metric that measure the distance (or similarity) between the original image $x$ and its estimated version provided by $f_\theta$, such as a mean squared error metric or a learned perceptual image patch similarity (LPIPS) metric. For example, a mean squared error metric can be expressed as:

$$D_{MSE} = \frac{1}{WH} \sum_{i \in W, j \in H} (\boldsymbol{x}(i,j) - f_{\boldsymbol{\theta}}(i,j))^2 , \qquad\qquad (3)$$

where, $W$ and $H$ are the width and height of the image $x$ that the INR network is trained to predict. The optimization of the network parameters $\theta$, according to equation (2), is typically performed by a machine learning optimization technique, applying, for example, a batch gradient descent algorithm. Following the training of the INR network 200 and using the optimal parameters $\theta$ (obtained via the optimization process), the INR network can be applied to predict a pixel value based on its corresponding coordinate values.

Using INR networks for the application of encoding and decoding images is further described with respect to FIGS. 3 and 4.

FIG. 3 is a block diagram of an example video encoder 300. In the example of FIG. 3, the video encoder 300 includes an INR-based encoder 320, a quantizer 330, and an entropy-based encoder 340. The INR-based encoder 320 receives an input data 310 to be coded. The input data 310 can be data associated with a frame of video (an image), a frame of a surface representation of an object, or a frame of volumetric data. To code the input data 310, the INR-based encoder 320 trains an INR network (e.g., the INR network 200 described herein). Specifically, based on the input data 310, the INR-based encoder 320 optimizes a cost function associated with the function $f_\theta$, representative of the INR network, to determine the optimal network parameters $\theta$. For example, for an input image with dimensions $W$ and $H$, $W$ times $H$ pairs of pixel coordinates $(i, j)$ and corresponding pixel values $\boldsymbol{x}(i,j)$ can be used to train the INR network according to equation (2). The optimal parameters, generated by the INR-based encoder 320, are then quantized by the quantizer 330, and then the quantized parameters are entropy-coded, by the entropy-based encoder 340, into a bitstream 350. Alternatively, the optimal parameters, generated by the INR-based encoder 320, can be coded using neural compression codecs such as Neural Network Coding (NNC)/ ISO/IEC 15938-17 or MPEG-7 part 17. The bitstream 350 can be used by a decoder to reconstruct the input image 310, as described in reference to FIG. 4.

FIG. 4 is a block diagram of an example video decoder 400. The decoder 400 generally reverses the operation of the encoder 300 of FIG. 3. In the example of FIG. 4, the video decoder 400 includes an entropy-based decoder 420, a dequantizer 430, and an INR-based decoder 440. As illustrated, the decoder 400 receives the bitstream 410, 350 (generated by the encoder 300) and entropy-decodes therefrom the quantized INR network parameters. The dequantizer 430 is then employed to dequantize these quantized INR network parameters, resulting in a restored version of the INR network parameters to be provided to the INR-based decoder 440.

The INR-based decoder 440 applies the trained INR network, defined by the restored INR network parameters, to generate the reconstructed data 450. For example, to decode an input image, the INR-based decoder 440 uses the INR network to predict the value of (or to evaluate $f_\theta$ using the coordinates of) any pixel of the input image. Thus, the decoder 400 can be applied to: 1) reconstruct the whole encoded image 310; 2) to reconstruct only a region of the encoded image; or 3) to progressively reconstruct the encoded image. For example, at the encoder 300, an INR network may be trained to predict pixel values of an image with dimensions $W$ = 256 by $H$ = 256 based on the corresponding coordinates. At the decoder 400, pixel values of the image can be predicted by evaluating the trained INR network using: 1) the full coordinate set used for training, including all pairs of $i \in 0,1, ... ,255$ and $j \in 0,1, ... ,255$; 2) a subset of the full set, including coordinates from a region of the encoded image; or 3) a first subset of the full set, including coordinates that subsample the image (forming a low-resolution version of the encoded image) and then a second subset including the remaining coordinates. Any set of coordinates can be used to predict the corresponding pixel values, for example, in order to interpolate or to extrapolate the encoded image 310.

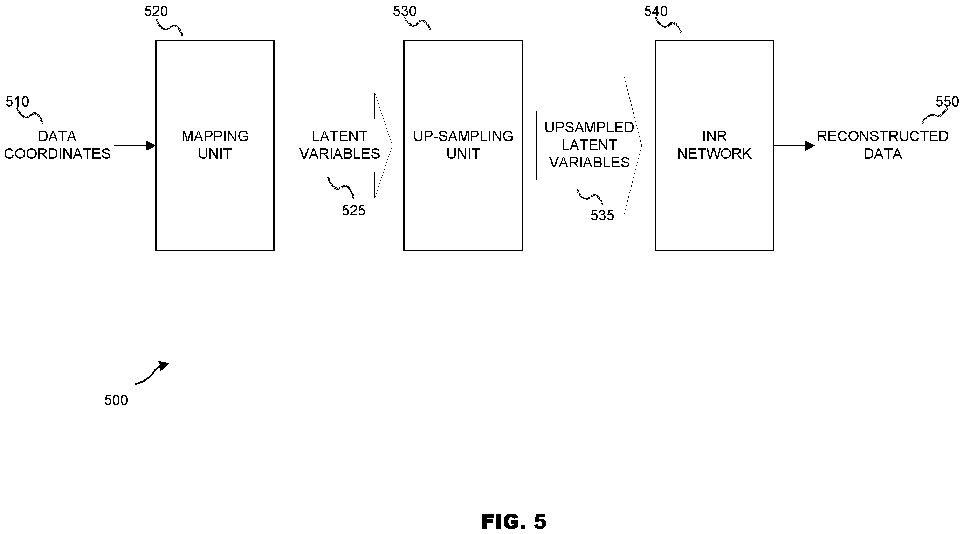

Hybrid INR networks have recently been applied to representing data, including images, videos, 3D objects, and volumetric data, among other applications. In a hybrid INR network, the data coordinates are first mapped into latent variables (or a feature vector). The latent variables are then used as input for the neural network. An example for a hybrid INR network is described in reference to FIG. 5.

FIG. 5 is a diagram illustrating a hybrid INR network 500. In an aspect, this hybrid INR network 500 can be applied by the INR-based encoder 320 of FIG. 3 and the INR-based decoder 440 of FIG. 4. In the example of FIG. 5, during the encoding of input data (that is, the training of the network 500), the input data's coordinates 510 are first mapped, by a mapping unit 520, into respective latent variables 525. The mapping can be implemented by a lookup table or a hash function, for example. The mapping may also involve any transformation, such as a Fourier transformation, a coordinate transformation, a normalization transformation, or a combination thereof. The latent variables 525 can be upsampled, by an up-sampling unit 530, resulting in upsampled latent variables 535. The upsampled latent variables are used as an input to an INR network 540 (e.g., such as INR network 200), trained to produce the reconstructed data 550. In a hybrid-INR network 500 the latent variables 525 are trained together with the parameters $\theta$ of the INR network 540, resulting in optimal network parameters and optimal latent variables. Using such an architecture helps in handling the local attributes of the input data. Indeed, a group of latent variables that correspond to a given part of the data may be uncorrelated with other groups of latent variables that correspond to other parts of the data, and, thus, groups of latent variables can be tailored to (or be characteristic of) corresponding parts of the data.

Following the training of the hybrid INR network 500 (e.g., by the encoder 320), the learned latent variables 525 and network parameters are quantized (e.g., by the quantizer 330) and coded (e.g., by the entropy-based encoder 340) into the bitstream. Thus, during inference, first the latent variable 525 and the network parameters of the trained INR network 540 are decoded (e.g., by the entropy-based decoder 420) from the bitstream and dequantized (e.g., by the dequantizer 430). Then, the decoded and dequantized latent variables are up-sampled 530. To reconstruct the data 550, the up-sampled latent variables are fed into the trained INR network 540 using the decoded and dequantized network parameters of the INR network.

A hybrid INR network, named a coordinate-based low complexity hierarchical image codec (COOL-CHIC), was proposed by Ladune et al. (see, Ladune et al., "COOL-CHIC: Coordinate-based low complexity hierarchical image codec," International Conference on Computer Vision (ICCV), 2023, hereinafter "Ladune"). In Ladune, the latent variables are arranged in hierarchical layers (or channels) ranging from a low-resolution representation (that provides for compact representation of smooth image regions) to a high-resolution representation (that captures the fine details of the image).

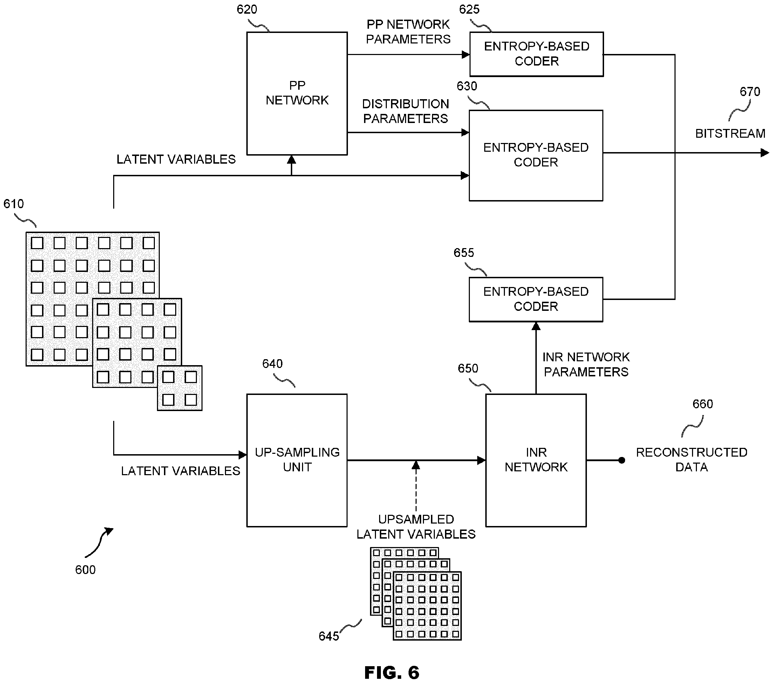

In hybrid INR networks, the latent variables, denoted by $y$, are typically the largest contributor to the bitrate (several orders of magnitude larger than that contributed by the INR network parameters). One approach to reduce the transmission cost of these latent variables is to entropy code these variables based on their learned distributions, as described in Ladune. Principles of the hybrid INR network proposed in Ladune are described below in reference to FIGS. 6-8.

FIG. 6 is a block diagram illustrating an example video encoder 600 applying a hybrid INR network. The encoder 600 includes a probability prediction (PP) network 620, an up-sampling unit 640, an INR network 650, and entropy-based coders 625, 630, 655. The encoder 600 is configured to process latent variables 610 (e.g., latent variables 525 generated by the mapping unit 520 of FIG. 5). The encoder 600 up-samples, by the up-sampling unit 640, the latent variables. Based on these upsampled latent variables 645 the INR network 650 is trained (overfitted) to produce reconstructed data 660 (e.g., a reconstructed image of a video frame). The training results in optimal INR network parameters $\theta$ that are coded, by the entropy-based coder 655, into the bitstream 670. In an inference mode, reconstructing the data (e.g., by a decoder 700) involves feeding the trained INR network, defined by the optimal network parameters $\theta$, with the upsampled latent variable. And so, in addition to the network parameters $\theta$, the latent variables need to be coded into the bitstream 670. As further explained below, due to their large bit representation, efficient coding of the latent variables calls for the estimation of their distributions. To that end, the encoder 600 can be further configured to learn the distributions of respective latent variables using the PP network 620 - that is, a network trained to produce parameters of distributions of respective latent variables. Based on these learned distribution parameters the entropy-based coder 630 codes the latent variables into the bitstream 670. The PP network is defined by PP network parameters, denoted by $\psi$, determined during the training of the PP network 620. The entropy-based coder 625 codes these PP network parameters into the bitstream 670. Note that in the example of FIG. 6, while the entropy-based coder 630 that codes the latent variables relies on their learned respective distributions, the other entropy-based coders 625, 655 that code the PP network parameters and the INR network parameters rely on respective non-learned distributions. In an aspect, for some of the latent variables respective non-learned distributions can be used by the entropy-based coder 630. These non-learned distributions may be fixed distributions or may be distributions that was learned with respect to other latent variables (e.g., latent variables representing data from previous frames).

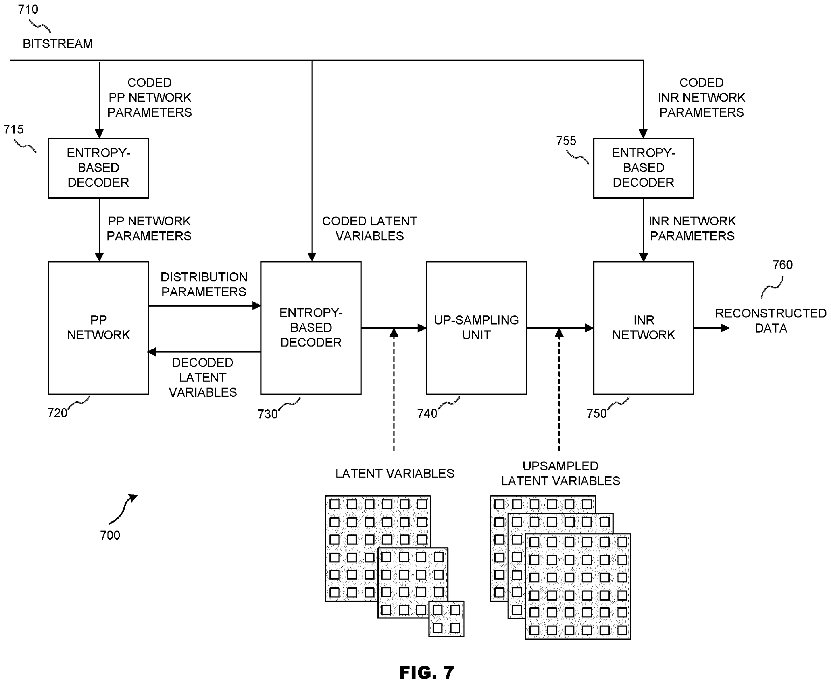

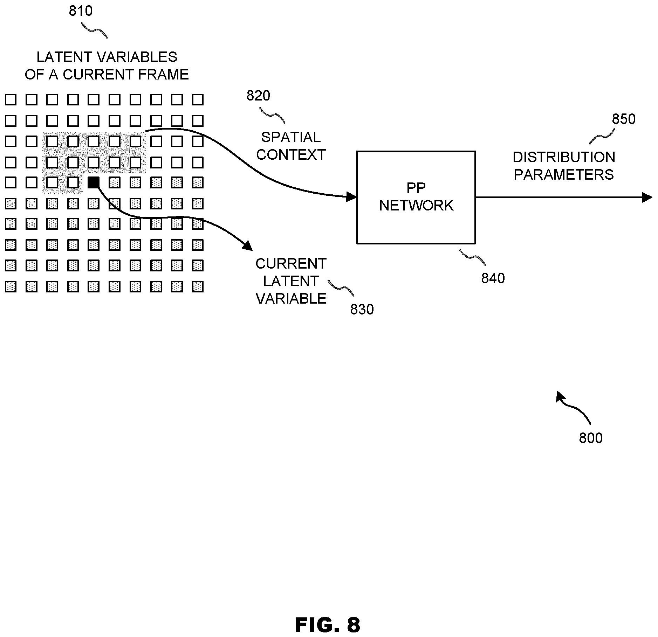

FIG. 7 is a block diagram illustrating an example video decoder applying a hybrid INR network 700. The decoder 700 includes a PP network 720, an up-sampling unit 740, an INR network 750, and entropy-based decoders 715, 730, 755. The PP network 720 produces distribution parameters of respective latent variables. The PP network 720 operates based on learned PP network parameters $\psi$, determined during the training of the PP network 620. The entropy-based decoder 715 decodes these PP network parameters from the bitstream 710. Based on the produced 720 distribution parameters, the entropy-based decoder 730 decodes the latent variables from the bitstream 710. Already decoded latent variables are provided back to PP network to serve as a context in producing the distribution parameters of the currently decoded latent variable (as further described in reference to FIG. 8). The decoded latent variables are then upsampled by the up-sampling unit 740 (as performed by the up-sampling unit 640 at the encoder 600). Fed by the up-sampled latent variables, the INR network 750 reconstructs the data 760 (e.g., a reconstructed image of a video frame) it is trained to synthesize based on the INR network parameters, decoded from the bitstream 710 by the entropy-based decoder 755.

The operation of the hybrid INR network is further explained with respect to an image $x$ of a video frame, however, $x$ may represent other types of data (such as a surface or a volume) that can be associated with a frame. Note that latent variables representative of data regions (e.g., pixels) from a data frame (e.g., a video frame) referred to herein also as corresponding to that data frame.

As illustrated, the INR network 650, 750 utilizes a hierarchical representation that includes multiple layers of different spatial resolutions 610. Each layer represents an image $x$ with a width $W$ and a height $H$ with a corresponding level of detail. Formally, the discrete latent variables, denoted by $\hat{y}$, can include $K$ layers of latent variables: $\hat{y} = \{\hat{y}_k, k = 0: (K-1)\}$. Each layer $\hat{y}_k$ is of width $W/2^k$ and of height $H/2^k$. During the up-sampling 640, each layer $\hat{y}_k$ may be upsampled by a factor of $2^k$ (using any interpolation method) to obtain the upsampled layer version, denoted by $\hat{z}_k$. Together, the upsampled layers, $\hat{z} = \{\hat{z}_k, k = 0: (K-1)\}$, result in a dense 3D representation 645 of dimension $W$ by $H$ by $K$. Thus, the INR network 650 can be trained based on $W$ by $H$ inputs of $\hat{z}(i, j)$, where each input can include up to $K$ latent variables, that is, $\hat{z}(i, j) = \{\hat{z}(i, j, k), k = 0: (K-1))\}$. For example, the trained INR network 750 can be used to predict a reconstructed pixel $\hat{x}(i,j)$, of the original pixel $x(i,j)$, by $\hat{x}(i,j) = f_\theta(\hat{z}(i, j))$. In an aspect, depending on the desired bitrate, not all the layers of the latent variables may be used to represent (code) an image $x$.

When compressing an image $x$ the goal is to do so while minimizing a cost function, as discussed with respect to equation (2). In the case of a hybrid INR network, the cost of coding an image can be expressed as:

$$Cost = D(\boldsymbol{x}, f_{\boldsymbol{\theta}}(\hat{z})) + \lambda R(\hat{y}, \theta, \psi), \qquad (4)$$

where $x$ denotes an image to be coded with $H$ hight, $W$ width, and $F$ color channels; where $\hat{y}$ denotes the quantized latent variables and $\hat{z}$ denotes their upsampled version; where $f_\theta$ denotes the INR network 650, 750 and $\theta$ denotes the INR network parameters; where $f_\psi$ denotes the PP network 620, 720 and $\psi$ denotes the PP network parameters; where $D$ denotes a distortion metric measuring the distance between the image $x$ and its reconstructed version $\hat{x}$, as produced by the INR network $f_\theta$ from the upsampled latent variables $\hat{z}$, that is, $\hat{x} = f_\theta(\hat{z})$; and where $R$ denotes the rate (in bits per pixel) measuring the number of bits that are required to represent a pixel in a bitstream, that is, the number of bits that are required to represent $\hat{y}, \theta$, and $\psi$. The distortion $D$ and the rate $R$ are balanced by a scalar value denoted by $\lambda$. In a case where the up-sampling unit 640 is implemented by a neural network, the parameters of that network are also learned and coded into the bitstream 670 to be used by the up-sampling unit 740 when used in an inference mode.

The objective, thus, is to find the latent variables $\hat{y}$, the INR network parameters $\theta$, and the PP network parameters $\psi$ that minimize the coding cost, as follows:

$$\min_{\hat{y}, \theta, \psi} Cost = \min_{\hat{y}, \theta, \psi} \left( D(x, f_{\boldsymbol{\theta}}(\hat{z})) + \lambda R(\hat{y}, \theta, \psi) \right). \qquad (5)$$

Since the contribution of the INR network parameters $\theta$ and the PP network parameters $\psi$ to the rate $R$ is not as significant as that of the latent variables $\hat{y}$, only the latter can be considered when minimizing the coding cost, that is, $R(\hat{y}, \theta, \psi) \approx R(\hat{y})$. Furthermore, $R(\hat{y})$ can be replaced by the cross entropy. Thus, equation (5) can be replaced by:

$$\min_{\hat{y},\theta,\psi} Cost = \min_{\hat{y},\theta,\psi}(D\left(x, f_\theta(\hat{z})\right) - \lambda \log_2 P_\psi\left(\hat{y}\right)), \qquad (6)$$

where $P_\psi(\hat{y})$ is the joint distribution of the latent variables $\hat{y}$. According to Equation (6), minimizing the cost involves minimizing the rate associated with the latent variables. This can be achieved by reducing the amount of information contained in the latent variables, at the price of a less accurate reconstruction, as less information in $\hat{y}$ is likely to increase the distortion $D$. Alternatively, minimizing the cost can be achieved by obtaining estimates of the distributions of the respective latent variables, as described herein.

Due to the high dimensionality of the latent variables, modeling of the joint distribution of $\hat{y}$, $P_\psi(\hat{y})$, is not tractable. Instead, $P_\psi(\hat{y})$ can be factorized as follows:

$$P_\psi(\hat{y}) = \prod_{i,j,k} p_\psi\left(\hat{y}_{ijk}\big|c_{ijk}^s\right), \qquad (7)$$

where $p_\psi\left(\hat{y}_{ijk}\big|c_{ijk}^s\right)$ denotes a discrete conditional probability of a latent variable at position $(i, j, k)$ conditioned on a corresponding spatial context $c_{ijk}^s$. Where $(i, j)$ represents the spatial coordinate of a latent variable in a layer $k$. The spatial context $c_{ijk}^s$ may be provided by spatially neighboring latent variables that have already been decoded, and preferably selected in a way that enables parallel decoding of the different layers of the latent variables (e.g., in a wavefront-like approach).

In practice, the discrete distribution $p_\psi\left(\hat{y}_{ijk}\big|c_{ijk}^s\right)$ can be modeled by integrating the continuous distribution of the non-quantized latent variable, denoted by $g(y)$ and modeled as a Laplacian distribution, for example. Thus, the PP network 620 learns the expectation parameter, $\mu_{ijk}$, and the scale parameter, $\sigma_{ijk}$, based on the context $c_{ijk}^s$. Accordingly, the probability of a latent variable $\hat{y}_{ijk}$ can be expressed as:

$$p_\psi\left(\hat{y}_{ijk}\big|c_{ijk}\right) = \int_{\hat{y}_{ijk}-0.5}^{\hat{y}_{ijk}+0.5} g(y)dy, \qquad (8)$$

where $g \cong \mathcal{L}(\mu_{ijk}, \sigma_{ijk})$ denotes a Laplacian distribution. Thus, in the case of a Laplacian distribution, for example, given a context $c_{ijk}$, the PP network 620 can be trained to produce the corresponding distribution parameters, that is, $\{\mu_{ijk}, \sigma_{ijk}\} = f_\psi(c_{ijk})$, as described next with respect to FIG. 8.

FIG. 8 is a diagram illustrating prediction of a latent variable distribution, using a spatial context 800. For simplicity of the presentation, only one layer of the latent variables 810 is illustrated, however, processes applied to this layer can be similarly applied to the other layers. The example of FIG. 8 illustrates the process of predicting a distribution of a current latent variable (indicated by a black square) to be coded (e.g., by encoder 600 or 900) or to be decoded (e.g., by decoder 700 or 1000). However, when coding the latent variable, typically, neighboring latent variables from the current frame are available. While when decoding the latent variable, typically, some of the neighboring latent variables from the current frame are not yet available (decoded). This is indicated by the white squares (available latent variables) and the patterned squares (not yet available latent variables).

As illustrated, a spatial context 820 can be constructed based on the latent variables in the spatial neighborhood of the current latent variable 830 - that is, for a current latent variable at position $(i, j, k)$, latent variables can be selected within a neighborhood located relative to position $(i, j, k)$ (e.g., latent variables grouped by the gray background in FIG. 8) to form the spatial context $c_{ijk}^s$. The obtained spatial context, $c_{ijk}^s$, can then be used by the PP network 840 to predict the distribution of the current latent variable. The distribution of the current latent variable is predicted by estimating the parameters of that distribution (e.g., $\{\mu_{ijk}, \sigma_{ijk}\}$). To that end, in the encoder, the PP network 840 is trained to produce, for each latent variable, the distribution parameters 850 based on the respective spatial context. This training can be done by minimizing the coding cost expressed in equation (6). The training of the PP network 840 results in the PP network parameters $\psi$. In the decoder, the trained PP network 840 is operated in an inference mode to produce, for each latent variable, the distribution parameters 850 from the respective spatial context. The trained PP network 840 operates based on the PP network parameters $\psi$ determined by the encoder during training and provided to the decoder in the bitstream.

In the case of a video stream, for example, a hybrid INR network can be used to represent each image of a video frame by a set of latent variables, $\hat{y}$, that (together with the PP network parameters $\psi$ and the INR network parameters $\theta$) can be coded into a bitstream. To decrease the bitrate of the compressed video, the set of latent variables can be trained to represent a group of video frames (see, e.g., Hyunjik et al., "C3: High-Performance and Low-Complexity Neural Compression from a Single Image or Video," Proceedings of the IEEE/CVF Conference on Computer Vision and Pattern Recognition (CVPR), 2024, pp. 9347-9358). However, such an approach makes it difficult to randomly access individual frames at the decoder end. In addressing this shortcoming, Leguay et al. propose a predictive hybrid INR network applicable to individual frames (see, Leguay et al., Cool-chic video: Learned video coding with 800 parameters, Data Compression Conference (DCC) 2024, IEEE, pp 23-32, 2024, hereinafter "Leguay").

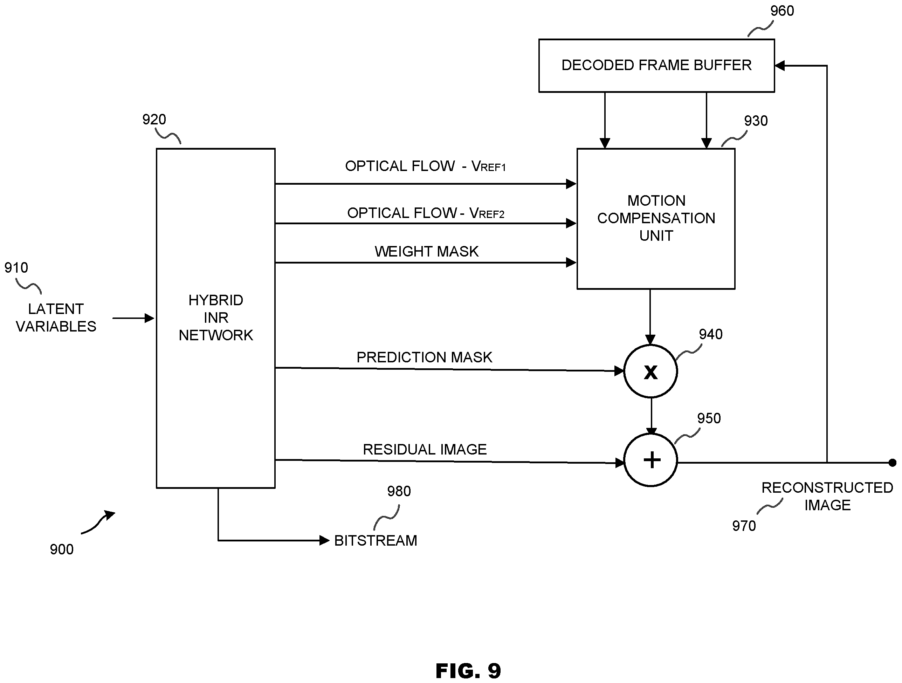

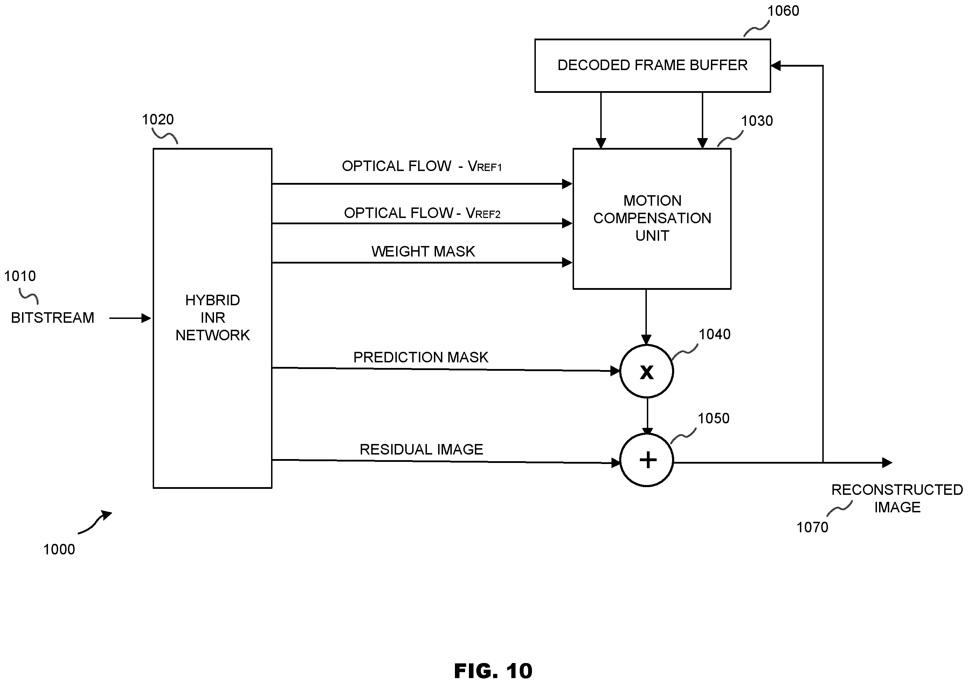

Principles of the predictive hybrid INR network proposed in Leguay are described next in reference to FIGS. 9 and 10. The operation of the predictive hybrid INR network is explained herein with respect to an image $x$ of a video frame, however, $x$ may represent other types of data (such as a surface or a volume) that can be associated with a frame. Note that latent variables representative of data regions (e.g., pixels) from a data frame (e.g., a video frame) referred to herein also as corresponding to that data frame.

FIG. 9 is a block diagram illustrating an example video encoder 900 applying a predictive hybrid INR network. The encoder 900 receives, as an input, latent variables 910 and outputs a bitstream 980. The encoder 900 includes a hybrid INR network 920, a motion compensation unit 930, a multiplier 940, an adder 950, and a decoded frame buffer 960. The hybrid INR network 920 generally operates (in a training mode) as the hybrid INR network described in reference to FIG. 6. However, in this case the hybrid INR network is trained to produce two optical flows, $v_{ref1}$ and $v_{ref2}$, a weight mask $\beta$, a prediction mask $\propto$, and a residual image $r$. The optical flows represent the pixel-wise motion between respective reference frames (already reconstructed images 970, stored in the decoded frame buffer 960) and the current frame. And so, the motion compensation unit 930 can use these optical flows to generate a prediction, denoted by $\tilde{x}$, of the currently coded image $x$, as follows:

$$\tilde{x} = \beta \cdot warp(\hat{x}_{ref1}, v_{ref1}) + (1 - \beta) \cdot warp(\hat{x}_{ref2}, v_{ref2}), \qquad (9)$$

where $warp$ is an operator that warps (i.e., spatially maps) an image into another image based on motion vectors given by an optical flow. Specifically, a first reference image, $\hat{x}_{ref1}$, is warped into a first prediction, $\tilde{x}_1 = warp(\hat{x}_{ref1}, v_{ref1})$ and a second reference image, $\hat{x}_{ref2}$ is warped into a second prediction, $\tilde{x}_2 = warp(\hat{x}_{ref2}, v_{ref2})$. Using elementwise multiplication, denoted by "·", the two predictions are then blended by the mask $\beta$, yielding the prediction image $\tilde{x}$. As illustrated in FIG. 9, the prediction image $\tilde{x}$ (output of the motion compensation unit 930) is then corrected by the residual image r, as follows:

$$\hat{x} = r + \propto \cdot \tilde{x}, \qquad (10)$$

where, the prediction mask $\propto$ is a binary mask that can be used to mask out 940 a prediction pixel if it does not reliably predict the corresponding pixel in $x$. Adding 950 the masked prediction image, $\propto \cdot \tilde{x}$, to the residual image $r$ produces the reconstructed image 970, $\hat{x}$.

Hence, the two optical flows, $v_{ref1}$ and $v_{ref2}$, the weight mask $\beta$, the prediction mask $\propto$, and the residual image $r$ can be learned by minimizing the coding cost expressed in equation (4), where $f_\theta(\hat{z}) = \hat{x} = r + \propto \cdot \tilde{x}$. Note that the predictive hybrid INR network, illustrated in FIG. 9, can be applied using only one reference image or any number of reference images available in the decoded frame buffer 960. In such a case equation (9) can be expressed as:

$$\tilde{x} = \sum_{q=1}^{Q} \beta_q \cdot warp(\hat{x}_{refq}, v_{refq}), \qquad (11)$$

Where, $Q$ is the number of reference images used; where $\sum_{q=1}^{Q} \beta_q$ is equal to an all-ones matrix. where $v_{refq}$ is the optical flow with respect to $\hat{x}_{refq}$, that is, the $q^{th}$ reference image. In a variant, the weight mask $\beta$, the prediction mask $\propto$, or both can be removed from the predictive hybrid INR network.

FIG. 10 is a block diagram illustrating an example video decoder 1000 applying a predictive hybrid INR network. The decoder 1000 receives, as an input, a bitstream 1010 and outputs reconstructed images 1070. The decoder 1000 includes a hybrid INR network 1020, a motion compensation unit 1030, a multiplier 1040, an adder 1050, and a decoded frame buffer 1060. The hybrid INR network 1020 generally operates (in an inference mode) as the hybrid INR network described in reference to FIG. 7. However, in this case the hybrid INR network produces two optical flows, $v_{ref1}$ and $v_{ref2}$, a weight mask $\beta$, a prediction mask $\propto$, and a residual image $r$. The optical flows represent the pixel-wise motion between respective reference frames (already reconstructed images 1070, stored in the decoded frame buffer 1060) and the current frame. And so, the motion compensation unit 1030 can use these optical flows to generate a prediction, denoted by $\tilde{x}$, of the currently decoded image $x$, as expressed by equation (9). As illustrated in FIG. 10, the prediction image $\tilde{x}$ (output of the motion compensation unit 1030) is then corrected by the residual image $r$, as shown by equation (10). Adding 1050 the masked prediction image, $\propto \cdot \tilde{x}$, to the residual image $r$ produces the reconstructed image 1070, $\hat{x}$.

Using spatial context (as described in reference to FIG. 8), the entropy coding of the latent variables is temporal context agnostic. This is because the estimated distributions of the latent variables are conditioned only on latent variables representing data from the current frame. Not being conditioned on a temporal context (that is, latent variables representing data from other frames) might lead to suboptimal performance in terms of a rate-distortion tradeoff (e.g., see equation (4)). However, although utilizing temporal context often leads to a better rate-distortion tradeoff, this may not always be the case.

According to aspects, temporal information can be used to estimate the distribution of a latent variable. Thus, the distribution of a latent variable can be conditioned on a context that is constructed based on a spatial context, a temporal context, or both (namely, a spatiotemporal context). Typically, the spatial context is constructed based on already decoded latent variables representative of data from the current frame (as described in reference to FIG. 8), and the temporal context is constructed based on already decoded latent variables representative of data from reference frame(s). Using a temporal context may leverage temporal redundancy across the latent variables, resulting in a more accurate prediction of respective distributions, and, thereby, a more efficient entropy coding of these latent variables. The use of a spatial context, a temporal context, or both may be indicated by a flag, coded into the bitstream.

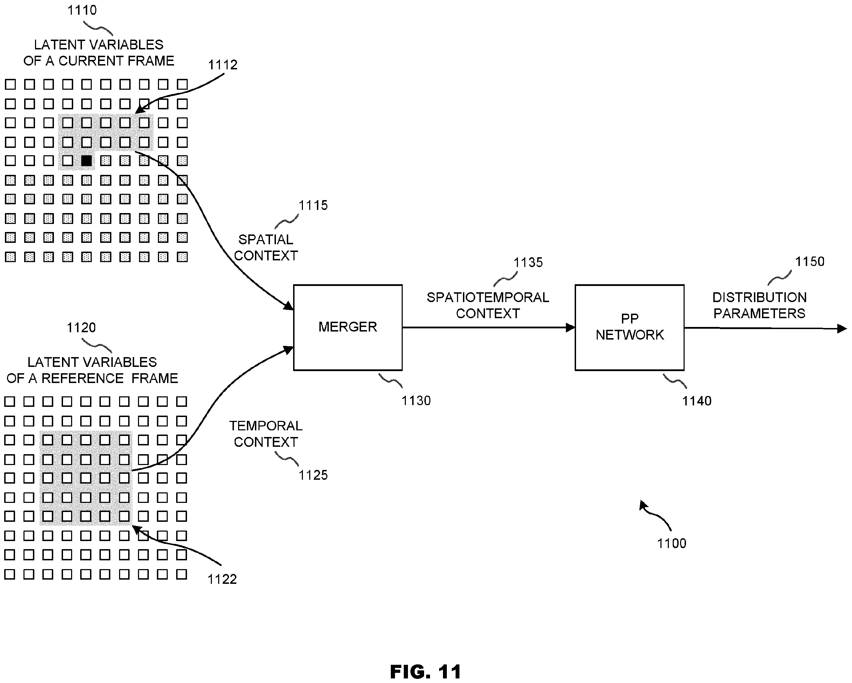

Generally, a spatiotemporal context, associated with a latent variable representing data from a current frame, is constructed as follows. To form a temporal context, latent variables, corresponding to one or more reference frames and located within a neighborhood relative to a position collocated with the latent variable, are selected. To form a spatial context, latent variables, corresponding to the current frame and located within a neighborhood relative to a position of the latent variable, are selected. A spatiotemporal context may be constructed by merging the spatial context and the temporal context. Utilizing such a spatiotemporal context in the estimation of a distribution of a latent variable exploits both spatial redundancy and temporal redundancy across the latent variables. Principles of constructing a temporal context from latent variables representing data from one reference frame will be described herein; extending these principles to constructing a temporal context from latent variables representing data from more than one reference frame should be straightforward. The construction of a spatiotemporal context is further described in reference to FIG. 11.

FIG. 11 is a block diagram illustrating prediction of a latent variable distribution, using a spatiotemporal context 1100. For simplicity of the presentation, only one layer (e.g., $\hat{y}_{k=0}$) of the latent variables is illustrated 1110, 1120. However, processes applied to this layer can be similarly applied to the other layers ($\{\hat{y}_k, k = 1: (K - 1)\}$). The example of FIG. 11 illustrates the process of predicting a distribution of a current latent variable (indicated by a black square) to be coded (e.g., by encoder 600 or 900) or to be decoded (e.g., by decoder 700 or 1000). When coding the latent variable, typically, neighboring latent variables (corresponding to the current frame and reference frame(s)) are available. When decoding the latent variable, typically, some of the neighboring latent variables (corresponding to the current frame) are not yet available (decoded). This is indicated by the white squares (available latent variables) and the patterned squares (not yet available latent variables).

As illustrated, a spatial context 1115 can be constructed based on latent variables located within a spatial context region 1112 associated with the current latent variable - that is, for a current latent variable at position $(i, j, k)$, latent variables can be selected within a neighborhood located relative to position $(i, j, k)$ (e.g., latent variables grouped by the gray background of region 1112) to form the spatial context $c_{ijk}^{s}$. Additionally, a temporal context 1125 can be constructed based on latent variables located within a temporal context region 1122 associated with the current latent variable. That is, for a current latent variable at position $(i, j, k)$, latent variables can be selected within a temporal neighborhood located relative to position $(i, j, k)$ (e.g., latent variables grouped by the gray background of region 1122) to form the temporal context $c_{ijk}^{t}$. Note that the manner in which latent variables are selected to form the spatial context 1115 and the temporal context 1125 by the encoder can be communicated to the decoder by a syntax element coded into the bitstream, may be inferred by the decoder based on other coding parameters, or may be fixed (known to the decoder).

Next, the spatial context 1115 and the temporal context 1125 can be combined by a merger 1130, forming a spatiotemporal context 1135, $c_{ijk}^{st}$. Combining the spatial context and the temporal context may be by any function of the underlying latent variables (i.e., variables within the spatial context region 1112 and the temporal context region 1122), such as an average, a median, or a sum. For example, the underlying latent variables can be combined based on their relative (spatial and/or temporal) distance from the current latent variable (e.g., weighted average). In an aspect, only a spatial context 1115 or a temporal context 1125 may be used. In such a case, there is no need to employ the merger 1130 and either context may be directly fed to the PP network 1140.

The obtained spatiotemporal context 1135, $c_{ijk}^{st}$, can be used by the PP network 1140 to predict the distribution of the current latent variable. The distribution of the current latent variable is predicted by estimating the parameters of that distribution. To that end, in the encoder 600, 900, the PP network 1140 can be trained, for each latent variable, to produce the distribution parameters 1150 based on its respective spatiotemporal context. This can be done by minimizing the cost expressed in equation (6), using the following term for the joint distribution $P_\psi(\hat{y})$:

$$p_\psi(\hat{y}) = \prod_{i,j,k} p_\psi\left(\hat{y}_{ijk} \middle| c_{ijk}^{st}\right). \qquad (12)$$

The training of the PP network 1140 results in the PP network parameters $\psi$. In the decoder 700, 1000, the trained PP network 1140 is operated in an inference mode, using the PP network parameters $\psi$ determined by the encoder during training and provided to the decoder in the bitstream. In an aspect, to predict the distribution of a current latent variable, the decoder may reuse the PP network parameters $\psi$ provided (in the bitstream or from another source) for another latent variable (corresponding to the current frame or a previously coded frame).

The distribution $p_\psi$ can follow any distribution function, for example, a conditional Gaussian distribution, a mixture of Gaussian distributions, or a Naive Bayes model. The parameters of these distributions can be estimated by the PP network 1140 using an auto regressive module or using a linear regression of a decision tree, for example.

According to aspects, the use of a certain context can be indicated by a syntax element coded into the bitstream. This allows the encoder to choose, based on a bitrate distortion tradeoff for example, whether to use 1) a spatiotemporal context, 2) a spatial context, 3) a temporal context, or 4) neither. For example, the encoder can choose not to use any context to predict the distributions of the latent variables, but instead to use a predetermined (default) distributions for the respective latent variables. Thus, a region of the current frame can be coded using four coding paths: 1) using a spatiotemporal context to predict the distributions of the latent variables, 2) using a spatial context to predict the distributions of the latent variables; 3) using a temporal context to predict the distributions of the latent variables; and 4) using predetermined distributions for the latent variables. Next the encoder can select the coding path that resulted in a lower coding cost (as expressed in equation (4)), the one that resulted in a lower distortion $D$, or the one that resulted in a lower rate $R$, for example.

For example, a syntax element can be coded into the bitstream using one bit to indicate whether a spatiotemporal context is used (e.g., "1") or not ("0"). Alternatively, the syntax element can be coded into the bitstream using two bits to indicate whether a spatiotemporal context is used (e.g., "11"), a spatial context is used (e.g., "01"), a temporal context is used (e.g., "10"), or neither (e.g., "00"). The syntax element may be determined with respect to a region of one frame, a whole frame, a group of frames, or a whole video stream. In an aspect, the choice whether to predict distributions of respective latent variables based on a spatiotemporal context, a spatial context, a temporal context, or neither need not be coded into the bitstream, but instead can be inferred based on other coding parameters, analysis of already reconstructed content of the frame(s) (e.g., using a machine learning algorithm), or any other heuristic.

The spatial context region 1112 and the temporal context region 1122, if having a static shape, may result in a suboptimal coding performance in terms of the rate-distortion cost (e.g., as expressed by equation (4)). This may be because, depending on the camera's motion or motion of content at the neighborhood of the current latent variable, the most relevant latent variables to the probability distribution of the current latent variable (i.e., those most correlated with the current latent variable) may not be considered in constructing the context. For example, to construct the spatial context 1115, more relevant latent variables may be residing outside the illustrated spatial context region 1112; and to construct the temporal context 1125, more relevant latent variables may be residing outside the illustrated temporal context region 1122. Hence, according to further aspects, an encoder (e.g., 600 or 900) can be configured to select the shape of the spatial context region and/or the shape of the temporal context region. The selected shape(s) can be coded into the bitstream, if used (instead of a default shape for example).

Hence, some data region of a coded frame may have longer-range dependencies. In such a case, to accurately model the probability distribution of a latent variable from that region (thereby, achieving a shorter bitstream for the latent variable through entropy coding), neighboring latent variables may be needed that are drawn from a region that is larger. Likewise, to accurately model the probability distribution of a latent variable, neighboring latent variables may be needed that are drawn from a region that extends in a certain direction. As an example, if a camera is moving towards the left of the scene, latent variables representing data region from a past reference frame may result in a more informative temporal context if positioned more to the right of the current latent variable than to the left.

Therefore, it is beneficial to determine the shape of a context region to improve entropy coding performance of the respective latent variable. According to aspects, during the encoding of data frames (e.g. by encoder 600 or 900) the shape of context regions - that is, the shape of a spatial context region and/or the shape of a temporal context region - can be determined and signaled in the bitstream (e.g., received by a decoder 700 or 1000). To that end, a set of predetermined shapes may be used to select from and the selected shape may be signaled in the bitstream. The selected shape may be with respect to each latent variable, a group of latent variables, latent variables corresponding to a current frame, or latent variables corresponding to multiple frames.

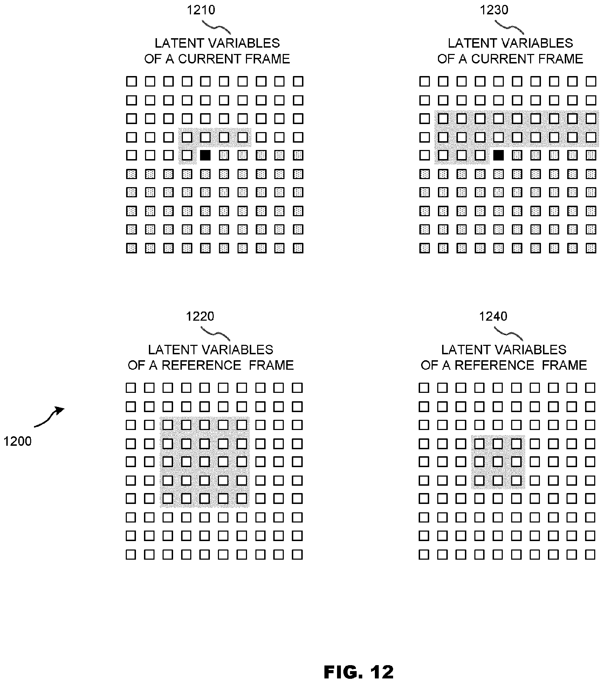

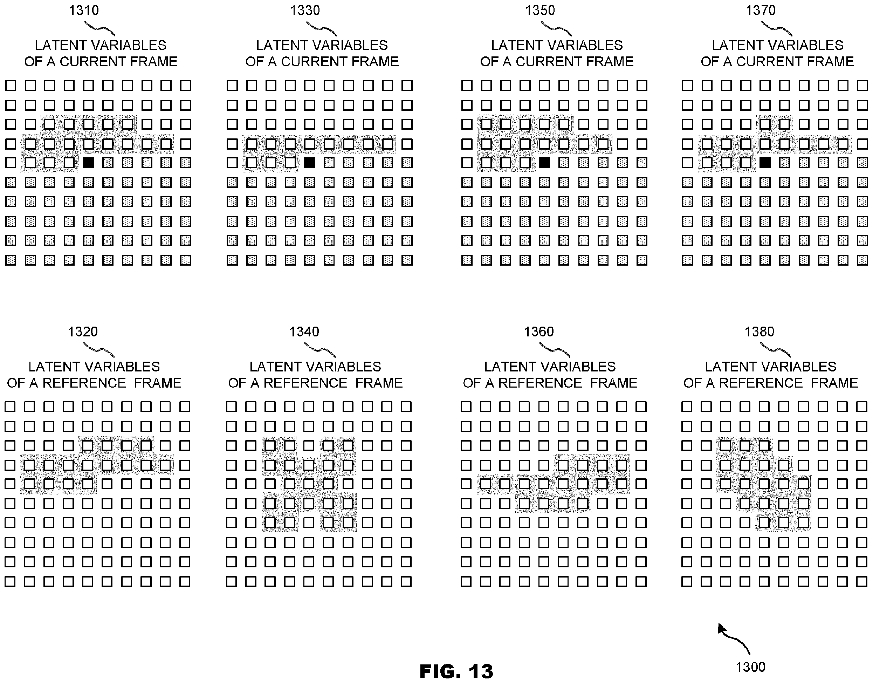

In a first aspect, an encoder may select one of several predetermined shapes for a context region. Typically, the shape may not be the same for the spatial context region and the temporal context region. Since the context is used to condition the distribution of a current latent variable, the latent variables this context is constructed from need to be available, that is, already decoded (as illustrated in FIGS. 8 and 11). Advantageously, the shape of the context region (i.e., the latent variables within that region) may be selected to allow parallel decoding of the layers of the latent variables, for example in a wavefront-like approach. For example, a pair of shapes may be selected, one shape for the spatial context region and one shape for the temporal context region, as illustrated by FIGS. 12 and 13.

FIG. 12 is a diagram illustrating configurations of context region shapes 1200. In a first configuration 1210, 1220, the temporal context region (gray region in 1220) consists of 25 latent variables organized in a square which center is collocated with the position of the current latent variable being coded (denoted by the black square in 1210) and the spatial context region (gray region in 1210) consists of 5 latent variables located to the left and to the top of the position of the current latent variable. In a second configuration 1230, 1240, the temporal context region (gray region in 1240) consists of 9 latent variables organized in a square which center is collocated with the position of the current latent variable being coded (denoted by the black square in 1230) and the spatial context region (gray region in 1230) consists of 21 latent variables located to the left and to the top of the position of the current latent variable. Furthermore, a third configuration 1210, 1240, may include temporal context region and spatial context region both with smaller number of latent variables as well as a fourth configuration 1230, 1220, may include temporal context region and spatial context region both with larger number of latent variables.

FIG. 13 is a diagram illustrating other configurations of context region shapes 1300. In the example of FIG. 13, four possible shapes for the temporal context region (gray regions in 1320, 1340, 1360, 1380) are illustrated that can be selected by an encoder; and four possible shapes for the spatial context region (gray regions in 1310, 1330, 1350, 1370) are illustrated that can be further selected by an encoder. The different shapes of a temporal context region allow to exploit relative movements of content from the current and reference frame(s) (e.g., detectable by motion analysis), so that latent variables (representing content from the reference frame(s)) will be better correlated with a currently coded latent variable (representing the content from the current frame), thereby, in a better position to provide temporal context. Likewise, the different shapes of a spatial context region allow to exploit similar patterns within the content of the current frame (e.g., detectable by pattern analysis), so that latent variables representing content with similar pattern to the content represented by the current latent variable will be better correlated with that current latent variable, thereby, in a better position to provide spatial context. And so, such better temporal context, better spatial context, or when combined 1130, better spatiotemporal context, can result in a more accurate estimate 1140 of the distribution parameters 1150 of the current latent variable, thereby, a more efficient entropy coding of that latent variable.

Hence, an encoder 600, 900, may select a shape for the spatial context region and/or for the temporal context region (such as those shapes illustrated in FIGS. 12 and 13). In a first aspect, this selection may involve evaluating the coding performance of different pairs of shapes for the spatial context region and the temporal context region, and the pair of shapes that yields the least coding cost may be selected. Thus, in evaluating the coding performance for each pair of shapes, the hybrid INR network (employed by encoder 600) or the predictive hybrid INR network (employed by encoder 900) may be trained as described herein to minimize the coding cost (see, e.g., equation (4)). Alternatively, only the PP network can be used to decide which pair of shapes should be selected, using precomputed latent variables and a coding cost including only $R(\hat{y})$.

In a second aspect, the shape(s) may be directly selected (e.g., using expert designed algorithm or a machine learning model) as follows. One or more shapes for the temporal context region may be directly selected based on motion analysis of content in the temporal neighborhood of the current latent variable to be coded. Likewise, one or more shapes for the spatial context region may be selected based on pattern analysis of content in the spatial neighborhood of the current latent variable to be coded. In the case where more than one shape is directly selected for the spatial context region and/or the temporal context region, determining the final pair of shapes can be done using the first aspect described above.

According to aspects, the encoder 600, 900 may signal in the bitstream whether a shape for a spatial context and/or a temporal context is selected, or a default shape is being used. This signal may be with respect to latent variable(s) representing all frames, one frame, or a region of a frame. In a case where selected shape(s) is (are) used (with respect to latent variable(s) representing all frames, one frame, or a region of a frame), the encoder may signal a syntax element indicating the selected shape(s). The selected shape for the spatial context region and/or for the temporal context region may be signaled in the bitstream using a syntax element that identifies the shapes used. Different shapes may be selected and used for the spatial context region and the temporal context region, used to construct the spatiotemporal context of each latent variable. In this case, a mask indicating the used shapes for each latent variable can be signaled in the bitstream. In some variants, only a spatial context is used and thus only its respective region shape may be signaled, while in other variants a temporal context is used (with or without spatial context) and thus its respective region shape may be signaled.

In other variants, the encoder may be able to select any arbitrary shape rather than one shape from a predefined set. In that case, the encoder can signal this shape in the bitstream (rather than a syntax element identifying one shape from a predefined set of shapes). Signaling the shape may be performed by coding the locations of the latent variables (enclosed by the shape) relative to the current latent variable being coded.

When a predictive hybrid INR network is employed, one or more reference frames may be used (e.g., as described above in reference to FIGS. 9 and 10). In this case, a different shape of the temporal context region may be selected and used with respect to the latent variables that correspond to each reference frame. And so, a syntax element may be signaled in the bitstream identifying the shape used with respect to each reference frame. In an aspect, when one shape (e.g., used with respect to one reference frame) can be used to derive other shapes (e.g., used with respect to other reference frames) only that one shape needs to be signaled in the bitstream. For example, when a first reference frame precedes the current frame and a second reference frame follows the current frame, the shape used with respect to the preceding reference frame may be spatially related to the shape used with respect to the following reference frame. For example, the spatial relation may be that of symmetry, such as point symmetry (over the position of the latent variable currently coded or another point) or vertical/horizontal symmetry. The symmetry may be implicitly known to both the encoder 900 and the decoder 1000 or may be signaled in the bitstream.

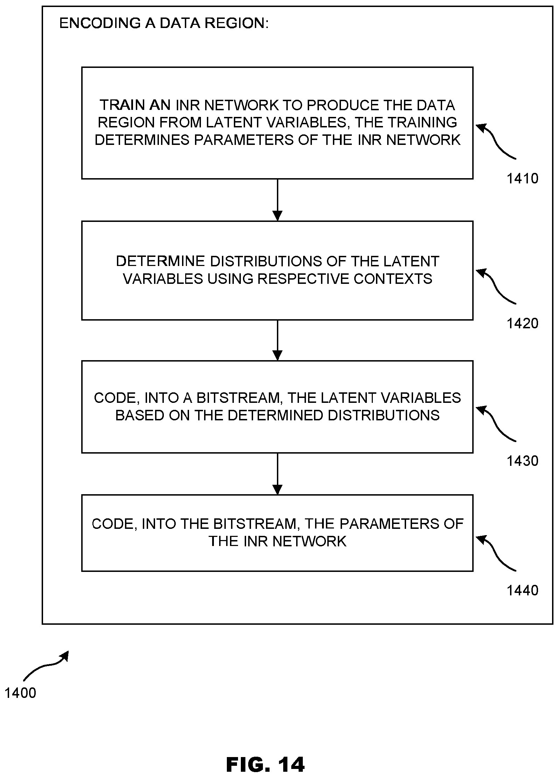

FIG. 14 is a flowchart of an example method for encoding data 1400, according to which aspects of the present embodiments can be implemented. The method 1400 in the example of FIG. 14 can be applied to encode, into a bitstream, a data region of a currently encoded frame. The data region may include one or more data elements, such as pixels or voxels; and the frame may be of a video image, a surface representation of an object, or volumetric data. According to aspects described herein, the encoding of the data region may include steps 1410 to 1440. In step 1410, an INR network can be trained to produce the data region from latent variables, the training determines the parameters of the INR network. As described herein, the latent variables can be learned or latent variables that were used to produce another data region of the currently encoded frame or of a previously encoded frame can be used. In step 1420, the distributions of the latent variables can be determined, where a distribution of a latent variable can be determined using a respective context. Such context can be constructed based on latent variables located within a shaped context region (e.g., the shaped context regions illustrated in FIGS. 12 and 13). These distributions can be modeled, for example, according to a conditional Gaussian distribution, a mixture of Gaussian distributions, or a Naive Bayes model. These distributions can also be learned. To that end, a neural network (e.g., a PP network) can be trained to produce the distributions from the respective contexts, where each distribution of a latent variable is defined by one or more distribution parameters, and where the training determines parameters of the neural network. The method 1400 can then be applied to coding into the bitstream: the latent variables based on the determined distributions, in step 1430; and the parameters of the INR network, in step 1440. In the case where the distributions of the latent variables are learned by a neural network, the parameters of the neural network are also coded into the bitstream.

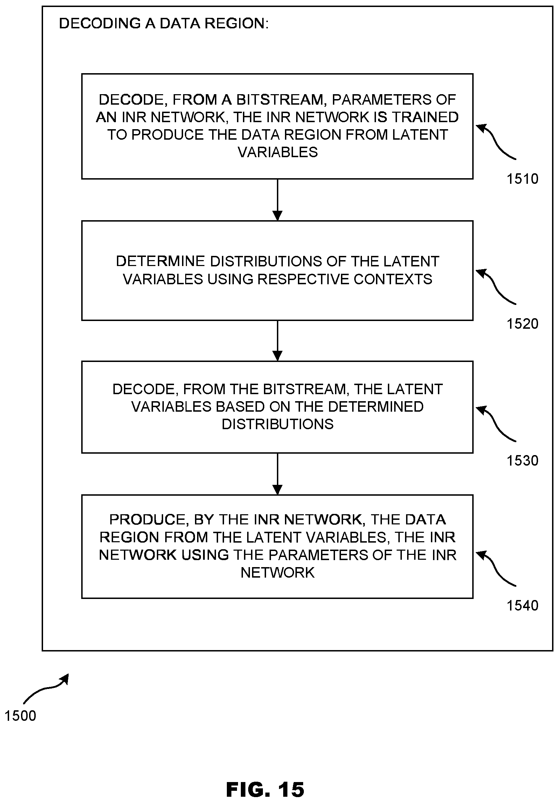

FIG. 15 is a flowchart of an example method for decoding data 1500, according to which aspects of the present embodiments can be implemented. The method 1500 in the example of FIG. 15 can be applied to decode, from a bitstream, a data region of a currently decoded frame. The data region may include one or more data elements, such as pixels or voxels; and the frame may be of a video image, a surface representation of an object, or volumetric data. According to aspects described herein, the decoding of the data region may include steps 1510 to 1540. In step 1510, the parameters of an INR network can be decoded from the bitstream. This INR network is trained to produce the data region from latent variables. In step 1520, the distributions of the latent variables can be determined, where a distribution of a latent variable can be determined using a respective context. Such context can be constructed based on latent variables located within a shaped context region (e.g., the shaped context regions illustrated in FIGS. 12 and 13). In an aspect, the distributions can be produced by a neural network (e.g., a PP network), in which case the method 1500 can be further applied to decode from the bitstream the parameters of the neural network, used by the network to produce the distributions from their respective spatiotemporal contexts. Next, in step 1530, the method 1500 is applied to decoding from the bitstream the latent variables based on the determined distributions. Then, the data region can be produced by the INR network (using the decoded INR network parameters) from the latent variables, in step 1540.

In an aspect, the encoding process 1400 further includes coding into the bitstream a flag that indicates whether the context is a spatial context, a temporal context, or a spatial and temporal context (i.e., a spatiotemporal context). Accordingly, during the decoding 1500, the flag may be decoded from the bitstream and may be used to inform the decoder whether the context used in determining a distribution of a latent variable is a spatial context, a temporal context, or a spatiotemporal context. In another aspect, the decoded flag is applied to data regions from multiple frames including the currently encoded frame.

As described herein, a context associated with a current latent variable (e.g., black square in FIG. 11) may comprise a temporal context 1125, a spatial context 1115, or both (a spatiotemporal context). The spatial context can be constructed based on a first set of latent variables located within a spatial context region 1112, spatially neighboring the latent variable. The temporal context 1125 can be constructed based on a second set of latent variables located within a temporal context region 1122, temporally neighboring the latent variable, where the latent variables from the second set are used by the INR network to produce a data region from a reference frame previously encoded. In an aspect, a spatiotemporal context can be formed by combining the first set of latent variables and the second set of latent variables using a linear or nonlinear function. For example, the spatiotemporal context can be formed by combining the first set of latent variables and the second set of latent variables based on their distance to the current latent variable. Such distance may be in the coordinate space or the value space of the latent variables. Alternatively, or in addition, the spatiotemporal context can be formed by combining the first set of latent variables and the second set of latent variables based on the distance between the currently encoded frame and the reference frame.

As described herein with reference to FIGS. 12 and 13, the encoding process 1400 may further include coding into the bitstream a flag indicating the shape of a spatial context region and/or the shape of a temporal context region. During the decoding process 1500, such a flag can inform the decoder what latent variables should be used to construct a context for determining the distribution of the current latent variable. Accordingly, the encoding process 1400 may include selecting a shape for a spatial context region, and coding, into the bitstream, a flag identifying that shape. Selecting the shape may be from a set of predetermined shapes. Alternatively, latent variables (forming the shape), spatially neighboring the current latent variable, can be selected based on pattern analysis of the currently encoded frame. Furthermore, the encoding process 1400 may include selecting a shape for a temporal context region, and coding, into the bitstream, a flag identifying that shape. Selecting the shape may be from a set of predetermined shapes. Alternatively, latent variables (forming the shape), temporally neighboring the current latent variable, can be selected based on motion analysis of the currently encoded frame and the reference frame.

The illustrations of the aspects described herein are intended to provide a general understanding of the structure, function, and operation of the various aspects. The illustrations are not intended to serve as a complete description of all of the elements and features of apparatuses and systems that utilize the structures or methods described herein. Many other aspects may be apparent to those of skill in the art upon reviewing the disclosure. Other aspects may be utilized and derived from the disclosure, such that structural and logical substitutions and changes may be made without departing from the scope of the disclosure. Accordingly, the disclosure and the figures are to be regarded as illustrative rather than restrictive.

The description of the aspects is provided to enable the making or use of the aspects. Various modifications to these aspects will be readily apparent, and the generic principles defined herein may be applied to other aspects without departing from the scope of the disclosure. Thus, the present disclosure is not intended to be limited to the aspects shown herein but is to be accorded the widest scope possible consistent with the principles and novel features as defined by the following claims.

**Claims**

1. A method, comprising:
   encoding, into a bitstream, a data region of a currently encoded frame, the encoding comprises:

   training an implicit neural representation (INR) network to produce the data region from latent variables, the training determines parameters of the INR network,
   determining distributions of the latent variables, wherein a distribution of a latent variable is determined using a respective context, constructed based on latent variables located within a shaped context region,
   coding, into the bitstream, the latent variables based on the determined distributions, and
   coding, into the bitstream, the parameters of the INR network.

2. A method, comprising:
   decoding, from a bitstream, a data region of a currently decoded frame, the decoding comprises:

   decoding, from the bitstream, parameters of an INR network, the INR network is trained to produce the data region from latent variables,
   determining distributions of the latent variables, wherein a distribution of a latent variable is determined using a respective context, constructed based on latent variables located within a shaped context region,
   decoding, from the bitstream, the latent variables based on the determined distributions, and
   producing, by the INR network, the data region from the latent variables, using the parameters of the INR network.

3. An apparatus, comprising:

   at least one processor; and
   memory storing instructions that, when executed by the at least one processor, cause the apparatus to encode, into a bitstream, a data region of a currently encoded frame, the encoding comprises:

   training an INR network to produce the data region from latent variables, the training determines parameters of the INR network,
   determining distributions of the latent variables, wherein a distribution of a latent variable is determined using a respective context, constructed based on latent variables located within a shaped context region,
coding, into the bitstream, the latent variables based on the determined distributions, and
coding, into the bitstream, the parameters of the INR network.

4.  An apparatus, comprising:

    at least one processor; and
    memory storing instructions that, when executed by the at least one processor, cause the apparatus to decode, from a bitstream, a data region of a currently decoded frame, the decoding comprises:

        decoding, from the bitstream, parameters of an INR network, the INR network is trained to produce the data region from latent variables,
        determining distributions of the latent variables, wherein a distribution of a latent variable is determined using a respective context, constructed based on latent variables located within a shaped context region,
        decoding, from the bitstream, the latent variables based on the determined distributions, and
        producing, by the INR network, the data region from the latent variables, using the parameters of the INR network.

5.  The method according to claim 1 further comprising, or the apparatus according to claim 3 wherein the instructions further cause the apparatus to perform:
    coding, into the bitstream, a flag indicating whether the context is a spatial context, a temporal context, or a spatiotemporal context.

6.  The method according to claim 1 or 5, or the apparatus according to claim 3 or 5, wherein the context comprises a spatial context, and wherein:
    the spatial context is constructed based on a first set of latent variables located within a spatial context region, spatially neighboring the latent variable.

7.  The method according to claim 6 further comprising, or the apparatus according to claim 6 wherein the instructions further cause the apparatus to perform:

    selecting a shape for the spatial context region; and
    coding, into the bitstream, a flag identifying the shape.

8.  The method according to claim 7, or the apparatus according to claim 7, wherein the selecting of the shape for the spatial context region comprises:

    selecting the shape from a set of predetermined shapes, or
    selecting latent variables, spatially neighboring the latent variable, based on pattern analysis of the currently encoded frame.

9.  The method according to any one of claims 1 or 5-8, or the apparatus according to any one of claims 3 or 5-8, wherein the context further comprises a temporal context, and wherein:
    the temporal context is constructed based on a second set of latent variables located within a temporal context region, temporally neighboring the latent variable, wherein latent variables from the second set are used by the INR network to produce a data region from a reference frame previously encoded.

10. The method according to claim 9 further comprising, or the apparatus according to claim 9 wherein the instructions further cause the apparatus to perform:

    selecting a shape for the temporal context region; and
    coding, into the bitstream, a flag identifying the shape.

11. The method according to claim 10, or the apparatus according to claim 10, wherein the selecting of the shape for the temporal context region comprises:

    selecting the shape from a set of predetermined shapes, or
    selecting latent variables, temporally neighboring the latent variable, based on motion analysis of the currently encoded frame and the reference frame.

12. The method according to claim 9 further comprising, or the apparatus according to claim 9 wherein the instructions further cause the apparatus to perform:

combining the first set of latent variables and the second set of latent variables based on their distance to the latent variable.

13. The method according to claim 9 or 12 further comprising, or the apparatus according to claim 9 or 12 wherein the instructions further cause the apparatus to perform:

combining the first set of latent variables and the second set of latent variables based on the distance between the currently encoded frame and the reference frame.

14. The method according to any one of claims 1 or 5-13, or the apparatus according to any one of claims 3 or 5-13, wherein the determining of the distributions comprises:

training a neural network to produce the distributions of the latent variables from respective contexts, wherein the training determines parameters of the neural network; and
coding, into the bitstream, the parameters of the neural network.

15. The method according to claim 2 further comprising, or the apparatus according to claim 4 wherein the instructions further cause the apparatus to perform:
decoding, from the bitstream, a flag indicating whether the context is a spatial context, a temporal context, or a spatiotemporal context.

16. The method according to claim 2 or 15 further comprising, or the apparatus according to claim 4 or 15 wherein the instructions further cause the apparatus to perform:
decoding, from the bitstream, a flag identifying a shape of the shaped context region.

17. The method according to any one of claims 1-2 or 5-16, or the apparatus according to any one of claims 3-16, wherein the distributions are modeled according to a conditional Gaussian distribution, a mixture of Gaussian distributions, or a Naive Bayes model.

18. The method according to any one of claims 1-2 or 5-17, or the apparatus according to any one of claims 3-17, wherein the training of the INR network further comprises learning the latent variables.

19. The method according to any one of claims 1-2 or 5-17, or the apparatus according to any one of claims 3-17, wherein the latent variables are latent variables used to produce another data region of the currently encoded frame or of a previously encoded frame.

20. The method according to any one of claims 1-2 or 5-19, or the apparatus according to any one of claims 3-19, wherein the frame is of a video image, a surface representation of an object, or volumetric data.

FIG. 1

FIG. 2

**FIG. 3**

INPUT DATA 310 → INR-BASED ENCODER 320 → QUANTIZER 330 → ENTROPY-BASED ENCODER 340 → BITSREAM 350

300

**FIG. 4**

BITSTREAM 410 → ENTROPY-BASED DECODER 420 → DEQUANTIZER 430 → INR-BASED DECODER 440 → RECONSTRUCTED DATA 450

400

EP 4 701 182 A1

DATA COORDINATES → 510

MAPPING UNIT (520)

LATENT VARIABLES (525)

UP-SAMPLING UNIT (530)

UPSAMPLED LATENT VARIABLES (535)

INR NETWORK (540)

RECONSTRUCTED DATA (550)

500

**FIG. 5**

**FIG. 6**

**FIG. 7**

810

LATENT VARIABLES
OF A CURRENT FRAME

820

SPATIAL
CONTEXT

850

DISTRIBUTION
PARAMETERS

PP
NETWORK

CURRENT
LATENT
VARIABLE

830

840

800

**FIG. 8**

DECODED FRAME BUFFER — 960

MOTION COMPENSATION UNIT — 930

OPTICAL FLOW - $V_{REF1}$

OPTICAL FLOW - $V_{REF2}$

WEIGHT MASK

PREDICTION MASK

RESIDUAL IMAGE

× — 940

+ — 950

RECONSTRUCTED IMAGE — 970

HYBRID INR NETWORK — 920

LATENT VARIABLES — 910

BITSTREAM — 980

900

FIG. 9

**FIG. 10**

FIG. 11

1210

LATENT VARIABLES
OF A CURRENT FRAME

1230

LATENT VARIABLES
OF A CURRENT FRAME

1220

LATENT VARIABLES
OF A REFERENCE FRAME

1240

LATENT VARIABLES
OF A REFERENCE FRAME

1200

**FIG. 12**

1310

LATENT VARIABLES
OF A CURRENT FRAME

1330

LATENT VARIABLES
OF A CURRENT FRAME

1350

LATENT VARIABLES
OF A CURRENT FRAME

1370

LATENT VARIABLES
OF A CURRENT FRAME

1320

LATENT VARIABLES
OF A REFERENCE FRAME

1340

LATENT VARIABLES
OF A REFERENCE FRAME

1360

LATENT VARIABLES
OF A REFERENCE FRAME

1380

LATENT VARIABLES
OF A REFERENCE FRAME

**FIG. 13**

1300

ENCODING A DATA REGION:

TRAIN AN INR NETWORK TO PRODUCE THE DATA REGION FROM LATENT VARIABLES, THE TRAINING DETERMINES PARAMETERS OF THE INR NETWORK

1410

DETERMINE DISTRIBUTIONS OF THE LATENT VARIABLES USING RESPECTIVE CONTEXTS

1420

CODE, INTO A BITSTREAM, THE LATENT VARIABLES BASED ON THE DETERMINED DISTRIBUTIONS

1430

CODE, INTO THE BITSTREAM, THE PARAMETERS OF THE INR NETWORK

1440

1400

**FIG. 14**

DECODING A DATA REGION:

DECODE, FROM A BITSTREAM, PARAMETERS OF AN INR NETWORK, THE INR NETWORK IS TRAINED TO PRODUCE THE DATA REGION FROM LATENT VARIABLES

1510

DETERMINE DISTRIBUTIONS OF THE LATENT VARIABLES USING RESPECTIVE CONTEXTS

1520

DECODE, FROM THE BITSTREAM, THE LATENT VARIABLES BASED ON THE DETERMINED DISTRIBUTIONS

1530

PRODUCE, BY THE INR NETWORK, THE DATA REGION FROM THE LATENT VARIABLES, THE INR NETWORK USING THE PARAMETERS OF THE INR NETWORK

1540

1500

**FIG. 15**

Europäisches
Patentamt

European
Patent Office

Office européen
des brevets

# EUROPEAN SEARCH REPORT

**Application Number**

EP 24 30 6384

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | HYUNJIK KIM ET AL: "C3: High-performance and low-complexity neural compression from a single image or video", ARXIV.ORG, CORNELL UNIVERSITY LIBRARY, 201 OLIN LIBRARY CORNELL UNIVERSITY ITHACA, NY 14853, 5 December 2023 (2023-12-05), XP091664794, * sections 2, 3.3, A.4 * | 1-20 | INV. H04N19/13 H04N19/149 H04N19/172 H04N19/46 |
| A | WEI JIANG ET AL: "MLIC: Multi-Reference Entropy Model for Learned Image Compression", ARXIV.ORG, CORNELL UNIVERSITY LIBRARY, 201 OLIN LIBRARY CORNELL UNIVERSITY ITHACA, NY 14853, 16 May 2023 (2023-05-16), XP091508554, * sections 1, 2.2, 3.3-3.5 * | 1-20 | |
| A | US 2023/096567 A1 (NALCI ALICAN [US] ET AL) 30 March 2023 (2023-03-30) * paragraphs [0106] - [0113], [0150] - [0156] * | 1-20 | |
| A | LI SHUJIA ET AL: "Content-Adaptive Parallel Entropy Coding for End-to-End Image Compression", 2023 IEEE INTERNATIONAL CONFERENCE ON IMAGE PROCESSING (ICIP), IEEE, 8 October 2023 (2023-10-08), pages 3195-3199, XP034467510, DOI: 10.1109/ICIP49359.2023.10222067 [retrieved on 2023-09-11] * section 2; figure 1 * | 1-20 | |

TECHNICAL FIELDS
SEARCHED (IPC)

H04N

The present search report has been drawn up for all claims

| Place of search | Date of completion of the search | Examiner |
|---|---|---|
| Munich | 16 January 2025 | Montoneri, Fabio |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 6384

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2025

| Patent document cited in search report | Publication date | Patent family member(s) | | Publication date |
|---|---|---|---|---|
| US 2023096567 A1 | 30-03-2023 | CN | 118020297 A | 10-05-2024 |
| | | DE 112022004563 T5 | | 18-07-2024 |
| | | US | 2023096567 A1 | 30-03-2023 |
| | | WO | 2023049374 A1 | 30-03-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LADUNE et al.** COOL-CHIC: Coordinate-based low complexity hierarchical image codec. *International Conference on Computer Vision (ICCV)*, 2023
- **HYUNJIK et al.** C3: High-Performance and Low-Complexity Neural Compression from a Single Image or Video. *Proceedings of the IEEE/CVF Conference on Computer Vision and Pattern Recognition (CVPR)*, 2024, 9347-9358

- Cool-chic video: Learned video coding with 800 parameters. **LEGUAY et al.** Data Compression Conference (DCC). IEEE, 2024, vol. 2024, 23-32